# EUROPÄISCHE PATENTSCHRIFT

(11) **EP 2 536 936 B1**
(45) Veröffentlichungstag und Bekanntmachung des Hinweises auf die Patenterteilung: **06.05.2015**
(21) Anmeldenummer: 11717456.5
(22) Anmeldetag: 14.02.2011
(51) Int. Cl.: F02M 37/00, F02D 19/06, F02D 19/08, F02D 41/00

(54) **VERFAHREN ZUM UMSCHALTEN DER KRAFTSTOFFZUFUHR ZU EINER VERBRENNUNGSKRAFTMASCHINE VON EINEM ERSTEN AUF EINEN ZWEITEN KRAFTSTOFF**
METHOD FOR SWITCHING THE FUEL SUPPLY TO AN INTERNAL COMBUSTION ENGINE FROM A FIRST FUEL TO A SECOND FUEL
PROCÉDÉ DE COMMUTATION DE L'APPORT DE CARBURANT À UN MOTEUR À COMBUSTION INTERNE ENTRE UN PREMIER ET UN SECOND CARBURANT

(30) Priorität: 15.02.2010 DE 102010008097
(43) Veröffentlichungstag der Anmeldung: 26.12.2012
(73) Patentinhaber: Porep GmbH, 23775 Großenbrode (DE)
(72) Erfinder: POREP, Thomas, 23775 Großenbrode (DE)
(74) Vertreter: Lobemeier, Martin Landolf
(86) Internationale Anmeldenummer: PCT/DE2011/000136
(87) Internationale Veröffentlichungsnummer: WO 2011/098077

(56) Entgegenhaltungen:
- EP-A2- 1 647 685
- CH-A5- 633 612
- DE-A1- 19 828 772
- DE-A1-102007 056 819
- DE-A1-102008 031 597
- GB-A- 2 452 909

## Beschreibung

Die Erfindung betrifft ein Verfahren zum Umschalten der Kraftstoffzufuhr zu einer Verbrennungskraftmaschine von einem ersten Kraftstoff auf einen zweiten Kraftstoff, mit den Schritten a) Betreiben der Verbrennungskraftmaschine mit dem ersten Kraftstoff, b) Erniedrigen des Anteils des ersten Kraftstoffs in der der Verbrennungskraftmaschine zuführenden Kraftstoffleitung und Erhöhen des Anteils des zweiten Kraftstoffs in der der Verbrennungskraftmaschine zuführenden Kraftstoffleitung, c) Betreiben der Verbrennungskraftmaschine mit einem aus erstem Kraftstoff und zweitem Kraftstoff gebildeten Kraftstoffgemisch, und Wiederholen der Schritte b) und c) bis die Verbrennungskraftmaschine ausschließlich mit dem zweiten Kraftstoff betrieben wird.

Ein derartiges Verfahren ist beispielsweise aus der WO 2009/067970 A1 bekannt, wobei diesem bekannten Verfahren insbesondere das Problem zugrunde lag, dass ein Schiffsmotor vom Betrieb mit hochviskosem Schweröl auf einen Kraftstoff geringerer Viskosität, nämlich Dieselöl, umgeschaltet werden musste, wobei die Änderung der Viskosität durch Anpassung der Temperatur des Kraftstoffs bzw. Kraftstoffgemischs kompensiert werden sollte.

Grundsätzliches Problem aller Verfahren, bei denen der Betrieb einer Verbrennungskraftmaschine vom Verbrauch eines ersten Kraftstoffs auf einen zweiten Kraftstoff umgestellt werden soll, ist, dass zunächst ein definiertes Kraftstoffgemisch mit definierten Eigenschaften geschaffen werden muss, das zugunsten des zweiten Kraftstoffs solange verändert wird, bis die Verbrennungskraftmaschine ausschließlich mit dem zweiten Kraftstoff betrieben werden kann.

Die Einstellung des definierten Kraftstoffgemischs, bei dem beispielsweise definierte Anteile von erstem Kraftstoff und zweitem Kraftstoff vorliegen sollen, erweist sich allerdings aufgrund der unterschiedlichen Viskosität der verwendeten Kraftstoffe und unterschiedlicher Drücke oftmals, speziell wenn eine gleichmäßige Veränderung der Kraftstoffzusammensetzung nach Art einer Rampenfunktion, als schwierig.

Insbesondere hat sich in (nicht veröffentlichten) Vorversuchen zu dieser Erfindung gezeigt, dass die Stellung von 3/2-Wege-Drehschieberventile nur ungenügend Auskunft über die Anteile von erstem und zweiten Kraftstoff an einem Kraftstoffgemisch geben.

Aufgabe der Erfindung ist es daher ein Verfahren und ein System bereitzustellen, mit dem der Anteil von erstem und zweiten Kraftstoff präzise eingestellt werden kann.

Diese Aufgabe wird durch das Verfahren mit den Merkmalen nach Anspruch 1 und dem System mit den Merkmalen von Anspruch 6 gelöst. Die Unteransprüche geben vorteilhafte Ausgestaltungen der Erfindung wieder.

Grundgedanke der Erfindung ist es, die Durchflussrate des ersten Kraftstoffs in der den ersten Kraftstoff führenden Leitung und/oder die Durchflussrate des zweiten Kraftstoffs in der den zweiten Kraftstoff führenden Leitung zu bestimmen, bevor diese in der der Verbrennungskraftmaschine, z.B. einem Schiffsmotor, Kraftstoff zuführenden Leitung zusammengeführt werden. Die Stellung eines erfindungsgemäss die erste Kraftstoffleitung, die zweite Kraftstoffleitung und die den Kraftstoff der Verbrennungskraftmaschine zuführenden dritte Leitung miteinander verbindenden 3/2-Wege-Drehschieberventils gibt nämlich aufgrund der im Ventil herrschenden unterschiedlichen Viskositäts- und Druckverhältnisse der Kraftstoffarten keine Auskunft über die tatsächlich in der dritten Kraftstoffleitung vorhandenen Anteile von erstem und zweiten Kraftstoff, sodass die beim Mischen der Kraftstoffarten auftretenden Effekte je nach Ventilstellung empirisch ermittelt werden müssen. Gleiches gilt für Kraftstoffleitungsanordnungen, in denen in der ersten und in der zweiten Kraftstoffleitung je ein Ventil vorgesehen ist und die Zusammensetzung des Kraftstoffgemischs von der Einstellung beider Ventile abhängt.

Aus der Durchflussrate wenigstens eines Kraftstoffs kann - insbesondere wenn auch in der dritten Kraftstoffleitung eine Messung der Durchflussrate erfolgt - auf die Kraftstoffzusammensetzung des Kraftstoffgemischs geschlossen werden, wobei die Kraftstoffzusammensetzung des Kraftstoffgemischs durch Einstellen des entsprechenden Stellglieds, erfindungsgemäss des 3/2-Wege-Drehschieberventils, definiert reguliert werden kann. Dabei kann die Stellung des Stellglieds auch aufgrund des Verhältnisses der Durchflussrate von erstem bzw. zweitem Kraftstoff zur Durchflussrate des Kraftstoffgemischs erfolgen.

Hierfür ist eine mit der wenigstens einen Durchflussmesseinrichtung verbundene auf das wenigstens eine Stellglied wirkende Steuerung zum Einstellen des Anteils des ersten Kraftstoffs bzw. zum Einstellen des Anteils des zweiten Kraftstoffs am Kraftstoffgemisch vorgesehen, die anhand der Durchflussrate von erstem Kraftstoff und/oder zweitem Kraftstoff bzw. der auftretenden Änderung der Durchflussrate(n) einen gleichmäßigen Übergang vom Betrieb mit einem ersten Kraftstoff zum Betrieb mit einem zweiten Kraftstoff, beispielsweise gemäß einer vorgegebenen Rampenfunktion, schaffen kann.

Das erfindungsgemäße Verfahren eignet sich insbesondere für Schiffsmotoren, die wechselweise mit Schweröl und Dieselöl, insbesondere Marinedieselöl (MDO), Marinegasöl (MGO) oder anderen niedrigviskosen Destillaten, betrieben werden müssen. Allerdings ist das Verfahren auch für andere Motoren, z.B. mit Diesel und Rapsöl betriebene Motoren, geeignet.

## Patentansprüche

1. Verfahren zum Umschalten der Kraftstoffzufuhr zu einer Verbrennungskraftmaschine von einem ersten Kraftstoff auf einen zweiten Kraftstoff mit den Schritten
a) Betreiben der Verbrennungskraftmaschine mit dem ersten Kraftstoff,
b) Erniedrigen des Anteils des ersten Kraftstoffs in der der Verbrennungskraftmaschine zuführenden Kraftstoffleitung und Erhöhen des Anteils des zweiten Kraftstoffs in der der Verbrennungskraftmaschine zuführenden Kraftstoffleitung mittels eines 3/2-Wege-Drehschieberventils,
c) Betreiben der Verbrennungskraftmaschine mit einem aus erstem Kraftstoff und zweitem Kraftstoff gebildeten Kraftstoffgemisch, und
d) Wiederholen der Schritte b) und c) bis die Verbrennungskraftmaschine ausschließlich mit dem zweiten Kraftstoff betrieben wird,
**gekennzeichnet durch**
Bestimmen der Durchflussrate des ersten Kraftstoffs in der den ersten Kraftstoff führenden Leitung und/oder Bestimmen der Durchflussrate des zweiten Kraftstoffs in der den zweiten Kraftstoff führenden Leitung und
Einstellen des Anteils des ersten Kraftstoffs und des Anteils des zweiten Kraftstoffs am Kraftstoffgemisch anhand der Durchflussrate von erstem Kraftstoff und/oder zweitem Kraftstoff.

2. Verfahren nach Anspruch 1, **gekennzeichnet durch** Bestimmen der Durchflussrate des in der der Verbrennungskraftmaschine zuführenden Kraftstoffleitung geführten Kraftstoffs oder Kraftstoffgemischs, wobei das Einstellen des Anteils des ersten Kraftstoffs und des Anteils des zweiten Kraftstoffs am Kraftstoffgemisch anhand des Verhältnisses von der Durchflussrate von erstem Kraftstoff und/oder zweitem Kraftstoff und der Durchflussrate des Kraftstoffgemischs erfolgt.

3. Verfahren nach einem der vorhergehenden Absprüche, **dadurch gekennzeichnet, dass** der erste Kraftstoff Schweröl und der zweite Kraftstoffs Dieselöl ist.

4. Verfahren nach einem der vorhergehenden Ansprüche, **dadurch gekennzeichnet, dass** die Verbrennungskraftmaschine ein Schiffsmotor ist.

5. System zum Umschalten der Kraftstoffzufuhr zu einer Verbrennungskraftmaschine von einem ersten Kraftstoff auf einen zweiten Kraftstoff, mit
- einer einen ersten Kraftstoff führenden ersten Kraftstoffleitung,
- einer einen zweiten Kraftstoff führenden zweiten Kraftstoffleitung,
- einer der Verbrennungskraftmaschine Kraftstoff zuführenden dritten Kraftstoffleitung, und
- einem, die erste Kraftstoffleitung, die zweite Kraftstoffleitung und die dritte Kraftstoffleitung miteinander verbindenden 3/2-Wege-Drehschieberventil,
**gekennzeichnet durch**
wenigstens eine in der ersten Kraftstoffleitung und/oder in der zweiten Kraftstoffleitung angeordnete Durchflussmesseinrichtung, und
eine mit der wenigstens einen Durchflussmesseinrichtung verbundene auf das 3/2-Wege-Drehschieberventil wirkende Steuerung zum Einstellen des Anteils des ersten Kraftstoffs bzw. zum Einstellen des Anteils des zweiten Kraftstoffs am Kraftstoffgemisch anhand der Durchflussrate von erstem Kraftstoff und/oder zweitem Kraftstoff.

6. System nach Anspruch 5, **dadurch gekennzeichnet, dass** die Verbrennungskraftmaschine ein Schiffsmotor ist.

7. System nach einem der Ansprüche 5 und 6, **dadurch gekennzeichnet, dass** der erste Kraftstoff Schweröl und der zweite Kraftstoff Dieselöl ist.

## Claims

1. A method for switching the fuel supply to an internal combustion engine from a first fuel to a second fuel, comprising the steps of
a) operating the internal combustion engine using the first fuel,
b) lowering the fraction of the first fuel in the fuel line supplying the internal combustion engine and increasing the fraction of the second fuel in the fuel line supplying the internal combustion engine by means of a 3/2 way rotary disc valve,
c) operating the internal combustion engine using a fuel mixture comprising the first fuel and the second fuel, and
d) repeating the steps b) and c) until the internal combustion engine is operated only using the second fuel,
**characterized by**
determining the flow rate of the first fuel in the line conducting the first fuel and/or determining the flow rate of the second fuel in the line conducting the second fuel and
adjusting the fraction of the first fuel and the fraction of the second fuel in the fuel mixture based on the flow rate of the first fuel and/or second fuel.

2. The method according to Claim 1, **characterised by** determining the flow rate of the fuel or fuel mixture conducted in the fuel line supplying the internal combustion engine, adjusting the fraction of the first fuel and the fraction of the second fuel in the fuel mixture taking place using the ratio of the flow rate of the first fuel and/or second fuel and the flow rate of the fuel mixture.

3. The method according to one of the preceding claims, **characterised in that** the first fuel is heavy oil and the second fuel is diesel oil.

4. The method according to one of the preceding claims, **characterised in that** the internal combustion engine is a marine engine.

5. A system for switching the fuel supply to an internal combustion engine from a first fuel to a second fuel, having
- a first fuel line conducting a first fuel,
- a second fuel line conducting a second fuel,
- a third fuel line supplying the internal combustion engine with fuel, and
- a 3/2 way rotary disc valve interconnecting the first fuel line, the second fuel line and the third fuel line,
**characterised by**
at least one flow rate measuring device arranged in the first fuel line and/or in the second fuel line, and
a control system connected to the at least one flow rate measuring device and acting on the a 3/2 way rotary disc valve for adjusting the fraction of the first fuel or adjusting the fraction of the second fuel in the fuel mixture using the flow rate of the first fuel and/or the second fuel.

6. The system according to Claim 5, **characterised in** the internal combustion engine is a marine engine.

7. The system according to one of Claims 5 and 6, **characterised in that** the first fuel is heavy oil and the second fuel is diesel oil.

## Revendications

1. Procédé de commutation de l'alimentation en carburant vers un moteur à combustion interne d'un premier carburant à un deuxième carburant, avec les étapes
a) Fonctionnement du moteur à moteur à combustion interne avec le premier carburant,
b) Réduction de la part du premier carburant dans la conduite pour carburant allant vers le moteur à combustion interne et augmentation de la part du deuxième carburant dans la conduite pour carburant allant vers le moteur à combustion interne au moyen d'une vanne rotative à 3/2 voies.
c) Fonctionnement du moteur à combustion interne au moyen d'un mélange premier carburant-deuxième carburant, et
d) Répétition des étapes b) et c), jusqu'à ce que le moteur à combustion interne ne fonctionne plus qu'avec le deuxième carburant,
**caractérisé par**
Détermination de la vitesse d'écoulement du premier carburant dans la conduite transportant le premier carburant et / ou détermination de la vitesse d'écoulement du deuxième carburant dans la conduite transportant le deuxième carburant et
Réglage de la part du premier carburant et de la part du deuxième carburant dans le mélange au moyen de la vitesse d'écoulement du premier et/ou du deuxième carburant.

2. Procédé selon la Revendication 1, **caractérisé par** une détermination de la vitesse d'écoulement du carburant ou du mélange de carburants dans la conduite le transportant dans le moteur à combustion interne, à savoir que le réglage de la part du premier carburant et de la part du deuxième carburant dans le mélange de carburants se fait sur la base de la proportion de la vitesse d'écoulement du premier carburant et / ou du deuxième carburant et de la vitesse d'écoulement du mélange de carburants.

3. Procédé selon une des revendications précédentes, **caractérisé en ce que** le premier carburant est du pétrole lourd et le deuxième carburant du diesel.

4. Procédé selon une des revendications précédentes, **caractérisé en ce que** le moteur à combustion interne est un moteur de bateau.

5. Système de commutation de l'alimentation en carburant vers un moteur à combustion interne d'un premier carburant à un deuxième carburant, avec
- une première conduite transportant le premier carburant,
- une deuxième conduite transportant le deuxième carburant,
- une troisième conduite transportant du carburant au moteur à combustion interne, et
- une vanne rotative à 3/2 voies reliant entre elles la première conduite pour carburant, la deuxième conduite pour carburant et la troisième conduite pour carburant,
**caractérisé par**
au moins un dispositif de mesure du débit installé dans la première conduite pour carburant et/ou dans la deuxième conduite pour carburant, et
une commande agissant sur la vanne rotative à 3/2 voies et reliée à au moins un dispositif de mesure du débit, permettant de régler la part du premier ou du deuxième carburant dans le mélange de carburants au moyen de la vitesse d'écoulement du premier carburant et/ou du deuxième carburant.

6. Système selon la revendication 5, **caractérisée en ce que** le moteur à combustion interne est un moteur de bateau.

7. Système selon une des revendications 5 et 6, **caractérisé en ce que** le premier carburant est du pétrole lourd et le deuxième carburant du diesel.
